# EUROPÄISCHE PATENTSCHRIFT

(11) **EP 0 515 827 B1**
(45) Veröffentlichungstag und Bekanntmachung des Hinweises auf die Patenterteilung: **16.08.1995**
(21) Anmeldenummer: 92106712.0
(22) Anmeldetag: 18.04.1992
(51) Int. Cl.: G02B 6/44

(54) **Abzweigmuffe für ein optisches Kabel**
Function sleeve for an optical cable
Manchon de dérivation pour câble optique

(30) Priorität: 24.05.1991 DE 4116972
(43) Veröffentlichungstag der Anmeldung: 02.12.1992
(73) Patentinhaber: KABEL RHEYDT Aktiengesellschaft, D-41179 Mönchengladbach (DE)
(72) Erfinder: Delâge, Peter, Dipl.-Ing., W-4053 Jüchen 5 (DE); Böhme, Ralph, Dipl.-Ing., W-4050 Mönchengladbach 2 (DE); Girbig, Reinhard, Dipl.-Ing., W-4050 Mönchengladbach (DE); Moers, Herbert, Dipl.-Ing., W-4052 Korschenbroich 1 (DE)
(74) Vertreter: Mende, Eberhard, Dipl.-Ing.

(56) Entgegenhaltungen:
- EP-A- 0 260 741
- DE-A- 3 537 684
- GB-A- 2 191 598
- US-A- 4 372 511

## Beschreibung

Die Erfindung betrifft eine Abzweigmuffe nach dem Oberbegriff des Anspruchs 1. Weiterbildungen der Erfindung sind in den Unteransprüchen gekennzeichnet.

Zum Anschließen von Teilnehmern an Breitbandkommunikationsnetze wird üblicherweise das Kabel an der Anschlußstelle aufgetrennt und eine Anschlußmuffe gesetzt. Im Bereich der Kabelauftrennung kann eine optische Ader nur mit einer geringen Länge entnommen werden. Zum Herstellen der Verbindung zum Teilnehmer ist eine weitere Ader nötig. Bei einem optischen Kabel, bei welchem eine größere Länge der optischen Ader entnehmbar ist, kann auf eine Spleißstelle verzichtet werden. Es ist mit einem erhöhten Aufwand verbunden, eine T-förmige Übergangsmuffe in der bisher üblichen Art zu verwenden. Die optische Ader darf in ihrem Verlauf keine Knickstelle oder einen Krümmungsradius unter 50 mm aufweisen. Bei Unterschreiten eines minimalen Krümmungsradius würde das Licht nicht mehr geführt, sondern durch den optischen Mantel seitlich aus der optischen Faser austreten. Deshalb benötigen die bisher üblichen Muffen relativ viel Platz für die Spleißkassette.

Eine Abzweigmuffe ohne Spleißkassette ist aus EP-A-0 260 741 bekannt, jedoch ergibt sich aufgrund der dort gewählten Y-Anordnung der ein- und ausgehenden Kabel keine Notwendigkeit für einen Knickschutz.

Ein Knickschutz für Abzweigungen ist aus US-A-4,372,511, für optische Flachkabel aus GB-A-2 191 598 bekannt.

Der Erfindung liegt die Aufgabe zugrunde, eine spleißfreie Abzweigmuffe für ein optisches Flachkabel anzugeben, welche die Fixierung der abzuzweigenden optischen Ader und das Einhalten eines minimalen Krümmungsradius mit einfachsten Mitteln gewährleistet. Diese Aufgabe wird nach der Erfindung durch die Kennzeichen der in Anspruch 1 beschriebenen Merkmale gelöst. Weiterbildungen der Erfindung sind in den Unteransprüchen beschrieben.

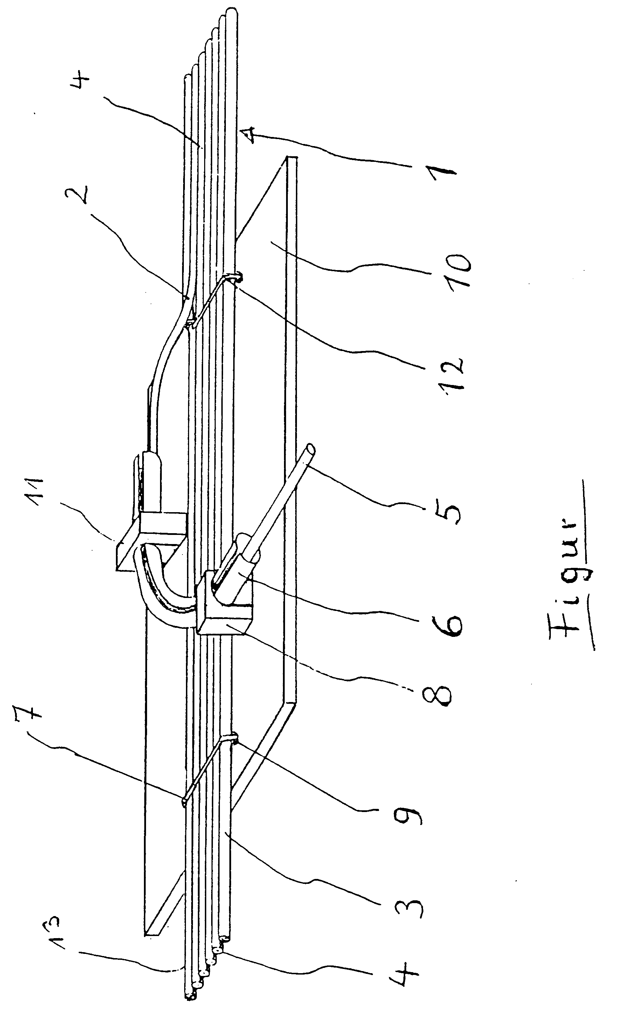

Ein Ausführungsbeispiel der Erfindung wird nachstehend anhand der Zeichnung näher erläutert; die Figur 1 zeigt eine perspektivische Ansicht einer erfindungsgemäßen Abzweigmuffe.

Das optische Flachkabel 1 besteht hier beispielsweise aus fünf optischen Adern 4, welche durch Stege untereinander mit den außenliegenden Zugentlastungselementen 3 und 13 verbunden sind. Eine optische Ader 2 wird aus dem Verbund des Flachkabels 1 herausgetrennt und zum Teilnehmer geführt. Dies kann über einen Kabelkanal oder ein Schutzrohr geschehen. In der Figur ist dargestellt, daß die Ader 2 ein Knickschutzrohr 6 passiert und an der Vorderseite 5 austritt. Von der Stelle 2 geht die Ader über das gebogene Rohr 6 und die Austrittstelle 5 zum Teilnehmer, ohne daß ein Spleiß nötig wäre. Der Bogen dient als Knickschutz und weist einen Radius von etwa 100 mm auf. Das Rohr 6 besteht vorzugsweise aus Kunststoff und ist geschlitzt, um die optische Ader leichter in den Bogen einlegen zu können. Das Rohr 6 wird durch Schellen 8 und 11 an einer Grundplatte 10 befestigt.

Da das Flachkabel durch Kabelbinder 7 und 12 ebenfalls an der Grundplatte befestigt ist, können sich das Flachkabel und der Abzweigbogen 6 nicht gegeneinander verschieben. Damit ist sichergestellt, daß die optische Ader beim Abzweig 5 Zugkräften ausgesetzt werden kann, ohne daß diese Ader abknickt. Die Zugentlastungselemente 3 und 13 sichern nicht nur das Kabel gegen Zugbelastungen und Abknicken, sondern auch die in der Figur dargestellte Abzweigmuffe. Die Kabelbinder 7 und 12 sind durch Öffnungen 9 in der Grundplatte geführt, um die gegenseitige Verbindung zu gewährleisten.

## Patentansprüche

1. Abzweigmuffe für ein optisches Flachkabel (1), bei welcher das Flachkabel im Bereich eines Teilnehmeranschlusses entlang von Stegen, welche eine optische Ader (5) mit den Nachbarelementen verbinden, aufgetrennt und in Abstand von der Muffe zum Abzweigen aus dem Kabel durchgetrennt ist, so daß die abgezweigte optische Ader (5) im Bereich der Muffe keine Spleißverbindung aufweist, **dadurch gekennzeichnet**, daß Mittel vorgesehen sind, die die abgezweigte optische Ader vom Beginn der Auftrennstelle (2) in einem etwa rechtwinkligen Bogen zum optischen Kabel (1) über dieses hinweg führen, daß die Mittel einen Knickschutz umfassen, der den Bogen (6) sichert, und daß weitere Mittel (7, 12) zum Fixieren des Kabels (1) und Knickschutzes (6) gegeneinander vorhanden sind.

2. Abzweigmuffe nach Anspruch 1, dadurch gekennzeichnet, daß der Knickschutz aus einem gebogenen, thermoplastischen Rohr mit Längsschlitz besteht.

3. Abzweigmuffe nach Anspruch 2, dadurch gekennzeichnet, daß das Rohr auf einer Grundplatte (10) mit Schellen (8, 11) befestigt ist.

4. Abzweigmuffe nach einem der Ansprüche 1 bis 3, dadurch gekennzeichnet, daß das Kabel (1) und der Knickschutz (6) an einer Grundplatte (10) befestigt sind.

5. Abzweigmuffe nach einem der Ansprüche 1 bis 4, dadurch gekennzeichnet, daß bei dem optischen Flachkabel mindestens 5 optische Adern zwischen zwei der Zugentlastung dienenden Elementen (3, 13) angeordnet sind.

6. Abzweigmuffe nach einem der Ansprüche 1 bis 5, dadurch gekennzeichnet, daß der Bogen des Knickschutzes (6) einen Radius von etwa 100 mm aufweist.

7. Abzweigmuffe nach einem der Ansprüche 1 bis 5, dadurch gekennzeichnet, daß der Bogen des Knickschutzes (6) einen Radius von etwa 140 mm aufweist.

8. Abzweigmuffe nach einem der Ansprüche 1 bis 7, dadurch gekennzeichnet, daß die abzuzweigende optische Ader (5) in einem Abstand von mindestens 5 Metern von der Muffe aus dem Kabel herausgetrennt ist.

9. Abzweigmuffe nach einem der Ansprüche 4 bis 7, dadurch gekennzeichnet, daß zur Befestigung des Kabels (1) an der Grundplatte (10) Kabelbinder (7, 12) vorgesehen sind, welche durch Öffnungen in der Grundplatte hindurchgeführt sind.

## Claims

1. Junction sleeve for an optical ribbon cable (1), in which the ribbon cable is separated, in the region of a subscriber connection, along webs which connect one optical wire (5) to the adjacent elements and is cut through at a distance from the sleeve to branch out of the cable, so that the branched optical wire (5) has no splice connection in the region of the sleeve, characterized in that means are provided which guide the branched optical wire from the beginning of the separating location (2) in an approximately rectangular curve to the optical cable (1) beyond the latter, in that the means comprise a kink protector which secures the curve, and in that further means (7, 12) for fixing the cable (1) and the kink protector (6) with respect to each other are present.

2. Junction sleeve according to Claim 1, characterized in that the kink protector consists of a bent, thermoplastic tube with a longitudinal slit.

3. Junction sleeve according to Claim 2, characterized in that the tube is fastened on a baseplate (10) with clamps (8, 11).

4. Junction sleeve according to one of Claims 1 to 3, characterized in that the cable (1) and the kink protector (6) are fastened to a baseplate (10).

5. Junction sleeve according to one of Claims 1 to 4, characterized in that, in the optical ribbon cable, at least 5 optical wires are arranged between two elements (3, 13) serving for strain relief.

6. Junction sleeve according to one of Claims 1 to 5, characterized in that the curve of the kink protector (6) has a radius of about 100 mm.

7. Junction sleeve according to one of Claims 1 to 5, characterized in that the curve of the kink protector (6) has a radius of about 140 mm.

8. Junction sleeve according to one of Claims 1 to 7, characterized in that the optical wire (5) to be branched is separated out from the cable at a distance of at least 5 metres from the sleeve.

9. Junction sleeve according to one of Claims 4 to 7, characterized in that, for fastening the cable (1) to the baseplate (10), cable ties (7, 12) are provided, which are led through openings in the baseplate.

## Revendications

1. Manchon de dérivation pour un câble optique plat (1), dans le cas duquel, dans la zone d'une connexion avec un abonné, le long de barrettes qui unissent un conducteur optique (5) avec les éléments voisins, le câble plat fait l'objet d'une ouvraison puis, à une certaine distance du manchon prévu pour la dérivation à partir du câble, d'une séparation, de sorte que dans la zone du manchon le câble ne présente pas de liaison par cassette de raccordement, caractérisé par le fait que sont prévus des moyens pour, dès le début de l'endroit de l'ouvraison (2), faire passer le câble optique dérivé dans un cintre à peu près à angle droit par rapport au câble optique (1) et par-dessus celui-ci, que les moyens comportent une protection à l'égard d'un croquage qui garantit la sécurité du cintre (6) et qu'il existe d'autres moyens (7, 12) pour fixer l'un par rapport à l'autre le câble (1) et la protection à l'égard d'un croquage (6).

2. Manchon de dérivation selon la revendication 1, caractérisé par le fait que la protection à l'égard d'un croquage est constituée d'un tube thermoplastique cintré, avec fente longitudinale.

3. Manchon de dérivation selon la revendication 2, caractérisé par le fait que le tube est fixé sur une plaque de base (10) par des colliers (8, 11).

4. Manchon de dérivation selon l'une des revendications 1 à 3, caractérisé par le fait que le câble (1) et la protection à l'égard d'un croquage (6) sont fixés sur une plaque de base (10).

5. Manchon de dérivation selon l'une des revendications 1 à 4, caractérisé par le fait que dans le cas du câble optique plat, au moins 5 conducteurs optiques sont disposés entre deux éléments (3, 13) servant de décharge de traction.

6. Manchon de dérivation selon l'une des revendications 1 à 5, caractérisé par le fait que le cintre de protection à l'égard d'un croquage (6) présente un rayon d'environ 100mm.

7. Manchon de dérivation selon l'une des revendications 1 à 5, caractérisé par le fait que le cintre de protection à l'égard d'un croquage (6) présente un rayon d'environ 140mm.

8. Manchon de dérivation selon l'une des revendications 1 à 7, caractérisé par le fait que le conducteur optique à faire dériver (5) se sépare du câble à une distance d'au moins 5 mètres du manchon.

9. Manchon de dérivation selon l'une des revendications 4 à 7, caractérisé par le fait que pour la fixation du câble (1) sur la plaque de base (10) sont prévues des attaches de câble (7, 12) qui passent par des ouvertures prévues dans la plaque de base.
